# EUROPEAN PATENT SPECIFICATION

(11) **EP 3 148 132 B1**
(45) Date of publication and mention of the grant of the patent: **12.09.2018**
(21) Application number: 15187224.9
(22) Date of filing: 28.09.2015
(51) Int. Cl.: H04L 12/751

(54) **METHOD FOR TRANSMITTING AND/OR RECEIVING NETWORK LAYER REACHABILITY INFORMATION BY A NETWORK NODE OF A TELECOMMUNICATIONS NETWORK, TELECOMMUNICATIONS NETWORK, NETWORK NODE, PROGRAM AND COMPUTER PROGRAM PRODUCT**
VERFAHREN ZUM SENDEN UND/ODER EMPFANGEN VON NETZWERKSCHICHTERREICHBARKEITSINFORMATIONEN DURCH EINEN NETZWERKKNOTEN EINES TELEKOMMUNIKATIONSNETZWERKS, TELEKOMMUNIKATIONSNETZWERK, NETZWERKKNOTEN, PROGRAMM UND COMPUTERPROGRAMMPRODUKT
PROCÉDÉ POUR TRANSMETTRE ET/OU RECEVOIR DES INFORMATIONS D'ACCESSIBILITÉ DE COUCHE RÉSEAU PAR UN NOEUD D'UN RÉSEAU DE TÉLÉCOMMUNICATION, RÉSEAU DE TÉLÉCOMMUNICATIONS, NOEUD DE RÉSEAU, PROGRAMME INFORMATIQUE ET PRODUIT LOGICIEL

(43) Date of publication of application: 29.03.2017
(73) Proprietor: Deutsche Telekom AG, 53113 Bonn (DE)
(72) Inventor: Adams, Martin, 52146 Würselen (DE); Schatzmayr, Rainer, 53229 Bonn (DE)
(74) Representative: Schwöbel, Thilo K.

(56) References cited:
- US-A1- 2002 141 343
- US-A1- 2004 078 481
- US-A1- 2006 209 716
- US-A1- 2007 104 106

## Description

### BACKGROUND

The present invention relates a method for transmitting and/or receiving network layer reachability information by a network node of a telecommunications network, wherein the telecommunications network comprises a plurality of network nodes, wherein the telecommunications network is an IP (Internet Protocol) packet data network, wherein the network node provides a routing and/or forwarding operation of IPv6 data packets on the network layer (layer 3) according to the OSI model (Open Systems Interconnection model), wherein the network node transmits network layer reachability information to a further network node of the plurality of network nodes and/or receives network layer reachability information from a third network node of the plurality of network nodes.

The present invention furthermore relates to a telecommunications network for transmitting and/or receiving network layer reachability information by a network node of a telecommunications network, wherein the telecommunications network comprises a plurality of network nodes, wherein the telecommunications network is an IP (Internet Protocol) packet data network, wherein the network node provides a routing and/or forwarding operation of IPv6 data packets on the network layer (layer 3) according to the OSI model (Open Systems Interconnection model), wherein the network node transmits network layer reachability information to a further network node of the plurality of network nodes and/or receives network layer reachability information from a third network node of the plurality of network nodes.

Additionally, the present invention relates to a network node of a telecommunications network, wherein the network node is configured to transmit and/or receive network layer reachability information according to the inventive method.

Furthermore, the present invention relates to a program and to a computer program product for providing an enhanced routing and/or forwarding functionality in a telecommunications network.

Packet-based data networks (or packet data networks) transmit information from a source to a destination using datagrams, each comprising a header portion and a payload portion. A typical network node or network processing device handles packets with many different protocols, although a device may not process higher-level protocols if the device merely forwards the packet.

In such packet data networks, the network nodes, typically routers, analyze or classify data packets to determine whether the data packet should be rejected or routed and/or forwarded to another network node within the telecommunications network. In many cases, the identification of data flows is a first step for providing the service of the network node. A number of network services require packet classification, e.g., for access-control, firewalls, policy-based routing, provision of integrated/differentiated qualities of service, traffic billing, secure tunneling.

A router is a multi-port network device (or network node) that can receive and transmit data packets from/to each port simultaneously. Data packets typically have regular format with uniform header structure. The header structure usually contain data fields such as address, packet type. When a packet is received from a port, the network node or router typically uses the header information to determine whether a packet is discarded, logged, or forwarded. If a packet is forwarded, then the network node or router also calculates which output port the packet will be going to. The network node or router also accounts for the number of each type of packet passing by.

The forwarding decision (where to send the packet) is typically made based on the destination address carried in the packet. Between network nodes or routers within the internet, typically the Border Gateway Protocol (BGP) is used as the routing protocol but other routing protocols such as Open Shortest Path First (OSPF), Intermediate System to Intermediate System (IS-IS), or Routing Information Protocol (RIP) can alternatively also be used. The BGP may be used between so-called autonomous systems, typically comprising one or a plurality of network nodes or routers. Especially with respect to such a use of the BGP, it is also called Exterior Gateway Protocol (EGP). The BGP may also be used between different network nodes or routers that are part of an autonomous system, typically of one internet service provider, and is typically called Interior BGP or iBGP in this case. When using the BGP, network nodes or routers typically advertise network layer reachability information to other network nodes or routers that are either internal or external to the autonomous system of the respective network node (that advertises or transmits network layer reachability information). Such network layer reachability information typically consists of routing-related updating information by which the route is described. Typically such network layer reachability information transmission involves transmitting an address family prefix information and a length information. Related prior art can be found in US 2006/0209716 A1.

Handling the network layer reachability information in terms of transmitting and/or managing it typically requires matching and/or lookup processes, often using matching tables. By means of such processes, the network nodes, i.e. typically routers or firewalls, examine the network layer reachability information to determine updated configuration settings of different network nodes such that such network nodes are easily able to determine if operational payload data packets (input packets) should be rejected or routed and/or forwarded to another network node of the telecommunications network. The generation in view of a transmission of such network layer reachability information (to other network nodes) and/or the reception of such network layer reachability information (and subsequent re-configuration of the respective network node) usually involves using a user configurable mask-matching rule set (based on packet header fields and/or address family prefix information and a length information of the network layer reachability information).

IP addresses and masks are used to describe a certain sub-set of all possible IP addresses. The sub-sets are used, for example, to describe which IP addresses a router is advertising (i.e. sub-sets are used within route announcements which are transported through the means of routing protocols such as BGP, OSPF, IS-IS, or RIP), or which IP addresses fulfil a certain security policy.

However, the bit masks used today for specifying a certain match of IP addresses (IP net masks) for network layer reachability information are typically applied on IP addresses in a rather fixed manner, i.e. applying a matching for the first n bits (or the n leftmost bits), i.e. by means of an address family prefix information and a length information of the network layer reachability information.

This typically leads to substantial efforts that can be required related to transmitting, receiving as well as configuring, maintaining and/or updating lookup lists or network layer reachability information, especially if a large number of entries of such lists is to be handled.

### SUMMARY

An object of the present invention is to provide a technically efficient and cost effective solution for transmitting and/or receiving network layer reachability information by a network node (or router) of a telecommunications network.

The object of the present invention is achieved by a method for transmitting and/or receiving network layer reachability information by a network node of a telecommunications network according to claim 1.

It is thereby advantageously possible according to the present invention that a higher degree of flexibility can be achieved in the handling of network layer reachability information by means of allowing IP net masks to be applied when network reachability information is exchanged between routers or other network nodes. According to a conventional handling of IP addresses and corresponding bit masks, especially IP net masks, only a match (or the absence of a match) based on the first bits (i.e. the leftmost) bits of an IP address is possible as only an address family prefix information and a length information is conventionally transmitted for transmitting network layer reachability information. However, in certain situations, it is more interesting not to be limited to indicate only the first bits (of an Internet Protocol address information relating to network layer reachability information), but to have a more flexible mask that indicate certain bits inside an IP address defining network layer reachability information. The present invention is particularly interesting for the Terastream address concept, where certain bits in the upper part (i.e. leftmost) determine certain traffic type classes of IPv6 addresses, whereas in the lower part (i.e. right most), bits are commonly used to identify location, port or subscriber-line information.

According to the present invention, the telecommunications network comprises a plurality of network nodes and is an IP (Internet Protocol) packet data network. The network nodes of the telecommunications network typically provide a routing and/or forwarding operation on the network layer (layer 3) according to the OSI model (Open Systems Interconnection model) such that payload data packets, being IPv6 data packets and being received by one of the network nodes from another network node of the plurality of network nodes, is either rejected, or routed and/or forwarded to a third network node of the plurality of network nodes of the telecommunications network.

According to the inventive method, the network node transmits network layer reachability information to a further network node of the plurality of network nodes and/or receives network layer reachability information from a third network node of the plurality of network nodes. Thereby, the plurality of network nodes of the telecommunications network can exchange the network layer reachability information in a far easier manner than without the present invention. Furthermore, according to the present invention, it is possible to reduce the amount of route statements as certain bits can be excluded from the matching.

The method comprises at least the step of transmitting network layer reachability information to the further network node and/or receiving network layer reachability information from the third network node, wherein the network layer reachability information is, at least partly, defined based on an address information and a bit mask, the bit mask defining at least a first relevant binary digit of the network layer reachability information and/or the address information, and a second relevant binary digit of the network layer reachability information and/or the address information such that the first and second relevant binary digits of the bit mask are separated - within the bit mask - by at least one non-relevant binary digit of the bit mask.

According to the present invention, the telecommunications network is configured by means of exchanging data between network nodes. This data transmission between the network nodes - in order to correctly distribute network layer reachability information - is typically performed in the context of implementing a routing protocol, i.e. not for operational purposes (i.e. in operation, the router device or network node decides with respect to (operational) data packets based on the distributed network layer reachability information transmitted to and/or received from other network nodes). Thereby, IP address information or address information is exchanged as part of the network layer reachability information, e.g. in the form of lists. These lists are getting more and more complex which leads to substantial efforts that can be required related to configuring, maintaining and/or updating such lists, especially if a large number of entries of such lists is to be handled. According to the present invention, it is advantageously possible to replace this multitude of different list entries by defining a bit mask such that by matching the bit mask with the possible address information, it is possible to generate or to transmit the multitude of list entries automatically and with reduced efforts. The address information serves as route statements that - together with the bit mask - serves to generate the list entries.

According to a preferred embodiment of the present invention, the routing and/or forwarding operation of the network node results in that - in an operative situation of the telecommunications network - IPv6 data packets, being received by the network node from other network nodes of the plurality of network nodes, are
-- either rejected,
-- or routed and/or forwarded to other network nodes of the plurality of network nodes of the telecommunications network.

Thereby, it is advantageously possible according to the present invention that a large number of entries of route statements in a lookup table or in a lookup list (e.g. such as an ACL-list) is able to be generated or defined in a comparably easy manner, i.e. involving only one entry or one bit mask for defining a plurality of entries in the actually used lookup tables that the router, or, generally, the network node, is using on an operational level.

According to a further preferred embodiment of the present invention, the at least first and second relevant binary digits of the bit mask refer to the leftmost 64 binary digits of the network layer reachability information and/or the address information, specifying at least one out of the following: a semantic indication, a type of traffic indication, a location indication, a topology indication, and a subscriber indication.

Thereby, it is advantageously possible according to the present invention that a large number of entries in a lookup table or in a lookup list can be generated such that by means of setting or defining relevant binary digits within the bit mask, it is advantageously possible to provide a filtering based on at least one out of the following: a semantic indication, a type of traffic indication, a location indication, a topology indication, and a subscriber indication.

According to a further preferred embodiment of the present invention, the network layer reachability information and/or the address information comprises
-- a first number of binary digits related to a type of traffic indication and/or
-- a second number of binary digits related to a router area and/or
-- a third number of binary digits related to a user or related to a port and/or
-- a fourth number of binary digits related to a user sub-network,
wherein the first and second binary digits are part of the first number of binary digits and/or of the second number of binary digits and/or of the third number of binary digits and/or of the fourth number of binary digits.

Thereby, it is advantageously possible according to the present invention that a very large number of entries of, e.g., a lookup table or a lookup list are able to be generated by means of setting or defining relevant binary digits within the bit mask in such a manner that a topological filter reflecting the topological structure of the IP network, i.e. based on binary digits related to a router area and/or related to a port and/or related to a user sub-network, is able to be realized or defined - potentially involving a huge number of individual list entries of an operational lookup table (i.e. a lookup table actually used by the network node, e.g. a router) - by a minimal number of entries or bit masks, and, at the limit with only one bit mask entry.

According to the present invention it is furthermore preferred that the first and second binary digits of the network layer reachability information and/or the address information are part of the leftmost 64 bits of the network layer reachability information and/or the address information.

Thereby, it is advantageously possible according to the present invention that the bitmask is used for filtering IP address base on their network prefix, i.e. the leftmost 64 bits of the IP address.

Furthermore, the present invention relates to a telecommunications network for transmitting and/or receiving network layer reachability information by a network node of the telecommunications network according to claim 6.

It is thereby advantageously possible according to the present invention that a higher degree of flexibility can be achieved in the handling and/or masking of IP addresses, especially as route statements in network layer reachability information, by means of allowing IP net masks to be applied to parts of an IP address.

It is furthermore preferred according to the present invention, and especially with respect to the inventive telecommunications network, that the network nodes of the telecommunications network are, at least partly, linked by optical data transmission lines and/or by electrical or wireless data transmission lines.

Furthermore, the present invention also relates to a network node for a telecommunications network according to claim 7.

Thereby, it is advantageously possible according to the present invention that a higher degree of flexibility can be achieved in the handling and/or masking of IP addresses by means of allowing IP net masks to be applied to parts of an IP address. A network node according to the present invention might be a network node located within the telecommunications network within the control of a network operator, or a network node located at an enduser premises in the form of a customer premised device and/or as a home gateway that connects user devices with the telecommunications network.

Additionally, the present invention relates to a program comprising a computer readable program code which, when executed on a computer and/or on a network node of a telecommunications network, causes the computer and/or the network node of the telecommunications network to perform a method according to the present invention.

Still additionally, the present invention relates to a computer program product for transmitting and/or receiving network layer reachability information by a network node of a telecommunications network, the computer program product comprising a computer program stored on a storage medium, the computer program comprising program code which, when executed on a computer and/or on a network node of the telecommunications network, causes the computer and/or the network node of the telecommunications network according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network according to the present invention.
Figure 2 schematically illustrates a network node of the inventive telecommunications network.
Figure 3 schematically illustrates an example of matching a network address information with predetermined route statements.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

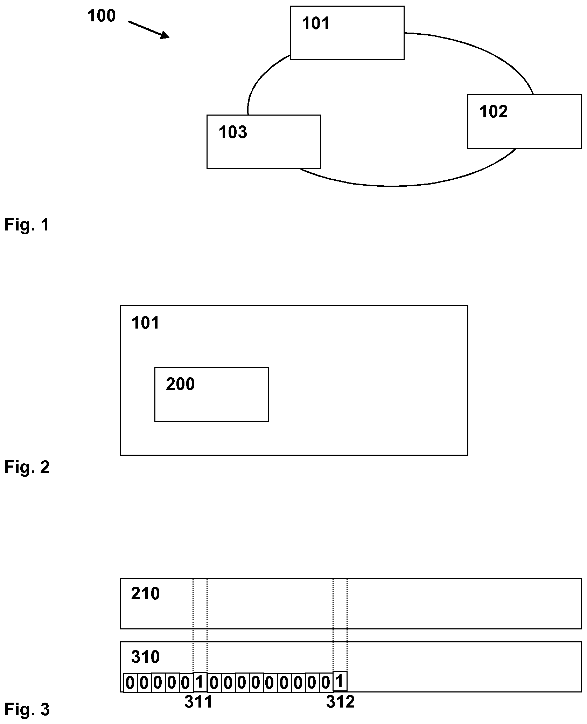

In Figure 1, a telecommunications network 100 or a part of a telecommunications network 100 according to an embodiment of the present invention is illustrated schematically. The telecommunications network 100 or the part of the telecommunications network 100 comprises a network node 101, a further network node 102, and a third network node 103. These network nodes 101, 102, 103 could also be designated by "first network node 101", "second network node 102", and "third network node 103". For the sake of simplicity, only three network nodes 101, 102, 103 of the telecommunications network 100 represented in Figure 1, however, the telecommunications network 100 might comprise a plurality of network nodes comprising far more than these network nodes.

The telecommunications network 100 is an IP (Internet Protocol) packet data network, and - at least - the (first) network node 101 provides a routing and/or forwarding operation on the network layer (layer 3) according to the OSI model (Open Systems Interconnection model) such that - in an operational situation of the telecommunications network 100 - data packets, being IPv6 data packets and being received by the network node 101 from the further network node 102, is either rejected, or routed and/or forwarded to the third network node 103. Hence the network nodes 101, 102, 103 provide router functionality and can also be called router or router nodes of the telecommunications network 100.

Such network nodes 101, 102, 103, especially routers, typically need to be configured for providing a proper functionality. Such configuration processes can be realized, e.g., by exchanging configuration information between the network nodes and a configuration node (not represented in the drawings) of the telecommunications network 100. Additionally to being configured (individually), the network nodes 101, 102, 103 need to exchange (i.e. to transmit to a further network node 102 and/or to receive from a third network node 103) network layer reachability information 200, typically using a routing information protocol such as the BGP.

According to the present invention and in order to provide for an appropriate process for exchanging the network layer reachability information 200 being as simple and easy as possible, the inventive method comprises the step of transmitting network layer reachability information 200 to the further network node 102 and/or receiving network layer reachability information 200 from the third network node 103.

This is schematically represented in Figure 2, where the (first) network node 101 of the inventive telecommunications network 100 is schematically represented comprising network layer reachability information 200 typically stored in a memory device or memory functionality associated to the (first) network node 101. Of course, the (first) network node 101 is only taken (in Figure 2) as an example of one network node of the plurality of (comparable or corresponding) network nodes of the telecommunications network 100. Typically, the network layer reachability information 200, stored within the first network node 101, is either (at least partly) transmitted to a further network node (such as the second network node 102) and/or it is received from a third network node 103. For the sake of simplicity, the transmission of the network layer reachability information 200 is not represented in Figure 2. However, the network layer reachability information 200 stored in the plurality of network nodes (such as the first network node 101, the second network node 102 and/or the third network node 103) might very well - and in typical situations will be - the result of both transmission and reception processes of network layer reachability information between the network nodes 101, 102, 103.

According to the present invention and as part of the process to exchange network layer reachability information 200, IP address information is exchanged between the network nodes 101, 102, 103, especially routers, as the network layer reachability information 200 necessarily also comprises (IP) address information 210 (or route statement information), e.g. in the form of lists.

Hence, the network layer reachability information 200 typically comprises or represents (IP) address information 210, which is shown in Figure 3: This figure schematically illustrates an example of matching a network address information 210 with a predetermined route statement information or route entry. The network layer reachability information 200 is, at least partly, defined based on such address information 210 and a bit mask 310, the bit mask 310 defining at least a first relevant binary digit 311 of the network layer reachability information 200 and/or the address information 210, and a second relevant binary digit 312 of the network layer reachability information 200 and/or the address information 210 such that the first and second relevant binary digits 311, 312 of the bit mask 310 are separated - within the bit mask 310 - by at least one non-relevant binary digit of the bit mask 310.

According to the present invention, route exchanges (especially transmissions of network layer reachability information 200) consist of many IPaddresses and make the exchange process less efficient in terms of data volume that is exchanged and processed at either ends. For example, if it is assumed that an IP address has the following semantics:
-- (Leftmost) Bit 0 to bit X: an IP address prefix assigned by an authority like RIPE, or further assigned by the operator of the telecommunications network 100 to segment its IP addresses to smaller chunks;
-- Bit X+1 to bit Y: a certain amount of bits that have a semantic as indicating the type of traffic in the IP packet;
-- Bit Y+1 to last bit: a certain amount of bits that indicate location, topology information, or some form of subscriber identification.

With this exemplary schema, creating a routing information update (i.e. exchanging network layer reachability information 200) on all IP sub-networks from a certain area requires the following route entries:
-- Bit 0 to bit X: all bits until X have to be considered (i.e. in the corresponding bit mask 310, these bits are relevant bits);
-- Bit X+1 to bit Y: all possible bit combinations (i.e. in the corresponding bit mask 310, these bits are non-relevant bits);
-- Bit Y+1 to end: the bits indicating the area being filtered.

The present invention solves the problem related with bits X+1 to Y: As all combinations should be allowed (i.e. are possible), in a traditional routing information update (of a network node 101, 102, 103), a route exchange for each possible combination would be needed (and hence also a corresponding configuration of such a route exchange for each of these combination would be required). According to the present invention, it is advantageously possible to reduce the amount (or the number) of route exchanges that would need to be configured, as certain bits can be excluded from the matching.

This shall be explained by means of the following example: Under the assumption that with respect to some address information,
-- all bits should be considered (i.e. are relevant) for bit 0 to bit X, and
-- all bits should be ignored for bit X+1 to bit Y, and
-- all bits should be considered (i.e. are relevant) for bit Y+1 to the end (of the address information), the inventive solution provides the possibility to express such a route entry by means of a single net mask.

Therefore, it is advantageously possible according to the present invention that efforts connected with the definition and/or the transmission of network layer reachability information (i.e. IP address information) can be reduced compared to conventionally building routing entry lists resulting in comparatively long address lists or long routing information (route statements).

If for example for a given address information,
-- bit 0 to bit 15 are the prefix defined by RIPE,
-- bit 16 to bit 31 indicate the type of service, and
-- bit 32 to bit 64 indicate location/port/subscriber, and
-- bit 64 to end are created by the subscriber,
an exchange of IP address information to match all IP addresses from a subscriber should be realized:
-- bit 0 to bit 15: these bits must indicate a specific number, such as a RIPE allocated prefix (e.g. 2003 as 2003 is the prefix allocated by RIPE);
-- bit 16 to bit 31: all possible bit combination. 65536 possible combinations
-- bit 32 to bit 64: subscriber identified for example by ffe1:0100;
-- bit 64 to end: all possible combinations,
i.e. resulting in at least 65536 different route statements and address information to be transmitted, as part of the network layer reachability information, to the network node 101 (or any further network node, such as network nodes 102 and/or 103 that needs to be configured).

According to the present invention, the exchange (i.e. the transmission and/or reception) of routing information or network layer reachability information 200 can be as easy as:
2003:1f0b:ffe1:0100::/64 match list ffff:0000:ffff:ffff::
which is a much more concise form to express the relevant bits to be considered.

This example only shows a simple matching pattern with a single continuous sequence of bit exclusions. However, more complex and more extensive patterns, e.g. such as comprising fractional bit exclusions at any position are possible according to the present invention.

For example, in TeraStream the following IP bit pattern is used:

For the leftmost 32 bits of an address information:

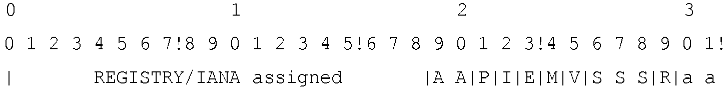

For the subsequent 32 bits of an address information:

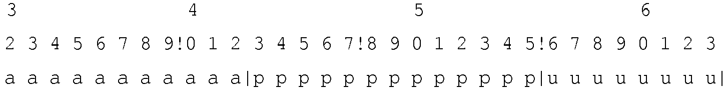

In this diagram, the following explanations apply:

"A" stands for "Address Format Identifier"; a value of "00" would, e.g., indicate BNG, a value of "01" would, e.g., indicate SD, a value of "10" would, e.g., indicate TeraStream, and a value of "11" would indicate BJ.

"P" stands for Public; a value of "0" would, e.g., indicate traffic of services internal to the operator of the telecommunications network 100, and a value of "1" would indicate traffic of services external to the operator of the telecommunications network 100.

"I" stands for Infrastructure; a value of "0" would, e.g., indicate "end user traffic", and a value of "1" would, e.g., indicate "infrastructure packet".

"E" stands for Endpoint/Service; a value of "0" would, e.g., indicate "network endpoint", and a value of "1" would indicate "service".

"M" stands for Reserved; a value of "0" would, e.g., indicate a mobile end point.

"V" stands for "L3 LPN Traffic"; "1" stands for Packet contains a L3 VPN packet, with inner destination upper 64 bit in lower 64 bit destination of outer header.

"R" stands for "Reserved".

"S" stands for service type; "0" stands for reserved, 1=internet, "2" stands for reserved, "3" stands for reserved, "4" stands for video, "5" stands for "L2 service", "6" stands for voice, "7" stands for management.
"a" stands for "R1 Area", comprises 13 bits and indicates the R1 router that the address is delegated from, max 8192 R1.
"p" stands for "R1 User", comprises 13 bits and indicates a User identifier.
"u" stands for "User subnet" which is delegated to the user.

An untagged IPv6 Internet Customer address information (i.e. without the first 19 bit defined by IANA/RIPE) would, e.g. read as follows: 1 0 1 0 0 0 0 0 0 1 0 0 0 0 0 0 0 0 0 0 0 0 0 1 0 0 0 0 0 0 0 0 0 0 0 0 1....

A C-Tag Vlan Tunnel address information (likewise without the first 19 bit defined by IANA/RIPE) would, e.g. read as follows: 1 0 0 0 0 0 1 0 1 0 0 0 0 0 0 0 0 0 0 0 0 0 1 0 0 0 0 0 0 0 0 0 0 0 0 1....

As already mentioned, in such an application, the first (i.e. leftmost) 19 bits of an address information are fixed, defined by IANA/RIPE. Bits 19 to 29 are variable and contain a semantic about the address. Bits 30 to 64 indicate router/port/customer-subnet.

## Claims

1. Method for transmitting and/or receiving network layer reachability information (200) by a network node (101) of a telecommunications network (100), wherein the telecommunications network (100) comprises a plurality of network nodes (101, 102, 103), wherein the telecommunications network (100) is an IP, Internet Protocol, packet data network, wherein the network node (101) provides a routing and/or forwarding operation of IPv6 data packets on the network layer, layer 3, according to the OSI model, Open Systems Interconnection model,
wherein the network node (101) transmits network layer reachability information (200) to a further network node (102) of the plurality of network nodes (101, 102, 103) and/or receives network layer reachability information (200) from a third network node (103) of the plurality of network nodes (101, 102, 103), wherein the method comprises at least the step of:
transmitting network layer reachability information (200) to the further network node (102) and/or receiving network layer reachability information (200) from the third network node (103), **characterised in that** the network layer reachability information (200) is, at least partly, defined based on an address information (210) and a bit mask (310), the bit mask (310) defining at least a first relevant binary digit (311) of the network layer reachability information (200) and/or the address information (210), and a second relevant binary digit (312) of the network layer reachability information (200) and/or the address information (210) such that the first and second relevant binary digits (311, 312) of the bit mask (310) are separated - within the bit mask (310) - by at least one non-relevant binary digit of the bit mask (310).

2. Method according to claim 1, wherein the routing and/or forwarding operation of the network node (101) results in IPv6 data packets being received by the network node (101) from other network nodes of the plurality of network nodes (101, 102, 103) are
-- either rejected,
-- or routed and/or forwarded to other network nodes of the plurality of network nodes (101, 102, 103) of the telecommunications network (100).

3. Method according to one of the preceding claims, wherein the at least first and second relevant binary digits (311, 312) of the bit mask (310) refer to the leftmost 64 binary digits of the network layer reachability information (200) and/or the address information (210), specifying at least one out of the following: a semantic indication, a type of traffic indication, a location indication, a topology indication, and a subscriber indication.

4. Method according to one of the preceding claims, wherein the network layer reachability information (200) and/or the address information (210) comprises
-- a first number of binary digits related to a type of traffic indication and/or
-- a second number of binary digits related to a router area and/or
-- a third number of binary digits related to a user or related to a port and/or
-- a fourth number of binary digits related to a user sub-network,
wherein the first and second binary digits (311, 312) are part of the first number of binary digits and/or of the second number of binary digits and/or of the third number of binary digits and/or of the fourth number of binary digits.

5. Method according to one of the preceding claims, wherein the first and second binary digits (311, 312) of the network layer reachability information (200) and/or the address information (210) are part of the leftmost 64 bits of the network layer reachability information (200) and/or the address information (210).

6. Telecommunications network (100) for transmitting and/or receiving network layer reachability information (200) by a network node (101) of the telecommunications network (100), wherein the telecommunications network (100) comprises a plurality of network nodes (101, 102, 103), wherein the telecommunications network (100) is an IP, Internet Protocol, packet data network, wherein the network node (101) is adapted to provide a routing and/or forwarding operation of IPv6 data packets on the network layer, layer 3, according to the OSI model, Open Systems Interconnection model,
wherein the network node (101) is configured to transmit network layer reachability information to a further network node (102) of the plurality of network nodes (101, 102, 103) and/or configured to receive network layer reachability information from a third network node (103) of the plurality of network nodes (101, 102, 103), wherein the telecommunications network (100) is configured for transmitting network layer reachability information (200) to the further network node (102) and/or receiving network layer reachability information (200) from the third network node (103), **characterised in that** the network layer reachability information (200) is, at least partly, defined based on an address information (210) and a bit mask (310), the bit mask (310) defining at least a first relevant binary digit (311) of the network layer reachability information (200) and/or the address information (210), and a second relevant binary digit (312) of the network layer reachability information (200) and/or the address information (210) such that the first and second relevant binary digits (311, 312) of the bit mask (310) are separated - within the bit mask (310) - by at least one non-relevant binary digit of the bit mask (310).

7. Network node (101) for a telecommunications network (100), wherein the network node (101) is configured to transmit and/or receive network layer reachability information (200) by a method according to one of claims 1 to 5, wherein the telecommunications network (100) comprises a plurality of network nodes (101, 102, 103), wherein the telecommunications network (100) is an IP, Internet Protocol, packet data network, wherein the network node (101) is adapted to provide a routing and/or forwarding operation on the network layer, layer 3, according to the OSI model, Open Systems Interconnection model, such that an IPv6 data packet received by the network node (101) from other network nodes of the plurality of network nodes (101, 102, 103) are
-- either rejected,
-- or routed and/or forwarded to other network nodes of the plurality of network nodes (101, 102, 103) of the telecommunications network (100), wherein the network node (101) is provided such that network layer reachability information (200) is transmitted to the further network node (102) and/or received from the third network node (103), **characterised in that** the network layer reachability information (200) is, at least partly, defined based on an address information (210) and a bit mask (310), the bit mask (310) defining at least a first relevant binary digit (311) of the network layer reachability information (200) and/or the address information (210), and a second relevant binary digit (312) of the network layer reachability information (200) and/or the address information (210) such that the first and second relevant binary digits (311, 312) of the bit mask (310) are separated - within the bit mask (310) - by at least one non-relevant binary digit of the bit mask (310).

8. Program comprising a computer readable program code which, when executed on a computer and/or on a network node (101) of a telecommunications network (100), causes the computer and/or the network node (101) of the telecommunications network (100) to perform a method according to one of claims 1 to 5.

9. Computer program product for transmitting and/or receiving network layer reachability information by a network node (101) of a telecommunications network (100), the computer program product comprising a computer program stored on a storage medium, the computer program comprising program code which, when executed on a computer and/or on a network node (101) of the telecommunications network (100), causes the computer and/or the network node (101) of the telecommunications network (100) to perform a method according to one of claims 1 to 5.

## Patentansprüche

1. Verfahren zum Senden und/oder Empfangen von Netzwerkschicht-Erreichbarkeitsinformationen (200) durch einen Netzknoten (101) eines Telekommunikationsnetzes (100), wobei das Telekommunikationsnetz (100) mehrere Netzknoten (101, 102, 103) umfasst, wobei das Telekommunikationsnetz (100) ein IP (Internet Protocol)-Paketdatennetz ist, wobei der Netzknoten (101) eine Routungs- und/oder Weiterleitungsoperation von IPv6-Datenpaketen auf der Netzwerkschicht (Layer 3) gemäß dem OSI (Open Systems Interconnection)-Modell bereitstellt, wobei der Netzknoten (101) Netzwerkschicht-Erreichbarkeitsinformationen (200) an einen weiteren Netzknoten (102) der mehreren Netzknoten (101, 102, 103) sendet und/oder Netzwerkschicht-Erreichbarkeitsinformationen (200) von einem dritten Netzknoten (103) der mehreren Netzknoten (101, 102, 103) empfängt, wobei das Verfahren mindestens folgenden Schritt umfasst:
Senden von Netzwerkschicht-Erreichbarkeitsinformationen (200) an den weiteren Netzknoten (102) und/oder Empfangen von Netzwerkschicht-Erreichbarkeitsinformationen (200) von dem dritten Netzknoten (103), **dadurch gekennzeichnet, dass** die Netzwerkschicht-Erreichbarkeitsinformationen (200) mindestens teilweise auf der Grundlage einer Adressinformation (210) und einer Bit-Maske (310) definiert werden, wobei die Bit-Maske (310) mindestens eine erste relevante binäre Ziffer (311) der Netzwerkschicht-Erreichbarkeitsinformationen (200) und/oder der Adressinformation (210) und eine zweite relevante binäre Ziffer (312) der Netzwerkschicht-Erreichbarkeitsinformationen (200) und/oder der Adressinformation (210) definiert, dergestalt, dass die ersten und zweiten relevanten binären Ziffern (311, 312) der Bit-Maske (310) innerhalb der Bit-Maske (310) durch mindestens eine nicht-relevante binäre Ziffer der Bit-Maske (310) getrennt sind.

2. Verfahren nach Anspruch 1, wobei die Routungs- und/oder Weiterleitungsoperation des Netzknotens (101) dazu führt, dass IPv6-Datenpakete, die durch den Netzknoten (101) von anderen Netzknoten der mehreren Netzknoten (101, 102, 103) empfangen werden,
- entweder zurückgewiesen werden oder
- zu anderen Netzknoten der mehreren Netzknoten (101, 102, 103) des Telekommunikationsnetzes (100) geroutet und/oder weitergeleitet werden.

3. Verfahren nach einem der vorangehenden Ansprüche, wobei sich die mindestens ersten und zweiten relevanten binären Ziffern (311, 312) der Bit-Maske (310) auf die äußerstlinken 64 binären Ziffern der Netzwerkschicht-Erreichbarkeitsinformationen (200) und/oder der Adressinformation (210) beziehen und mindestens eines von Folgendem spezifizieren: einen semantischen Hinweis, eine Art von Datenverkehrshinweis, einen Standorthinweis, einen Topologiehinweis und einen Teilnehmerhinweis.

4. Verfahren nach einem der vorangehenden Ansprüche, wobei die Netzwerkschicht-Erreichbarkeitsinformationen (200) und/oder die Adressinformation (210) Folgendes umfassen:
- eine erste Anzahl von binären Ziffern, die sich auf eine Art von Datenverkehrshinweis beziehen, und/oder
- eine zweite Anzahl von binären Ziffern, die sich auf ein Routergebiet beziehen, und/oder
- eine dritte Anzahl von binären Ziffern, die sich auf einen Nutzer beziehen oder auf einen Port beziehen, und/oder
- eine vierte Anzahl von binären Ziffern, die sich auf ein Nutzer-Subnetzwerk beziehen,
wobei die ersten und zweiten binären Ziffern (311, 312) Teil der ersten Anzahl von binären Ziffern und/oder der zweiten Anzahl von binären Ziffern und/oder der dritten Anzahl von binären Ziffern und/oder der vierten Anzahl von binären Ziffern sind.

5. Verfahren nach einem der vorangehenden Ansprüche, wobei die ersten und zweiten binären Ziffern (311, 312) der Netzwerkschicht-Erreichbarkeitsinformationen (200) und/oder der Adressinformation (210) Teil der äußerstlinken 64 Bits der Netzwerkschicht-Erreichbarkeitsinformationen (200) und/oder der Adressinformation (210) sind.

6. Telekommunikationsnetz (100) zum Senden und/oder Empfangen von Netzwerkschicht-Erreichbarkeitsinformationen (200) durch einen Netzknoten (101) des Telekommunikationsnetzes (100), wobei das Telekommunikationsnetz (100) mehrere Netzknoten (101, 102, 103) umfasst, wobei das Telekommunikationsnetz (100) ein IP (Internet Protocol)-Paketdatennetz ist, wobei der Netzknoten (101) dafür ausgelegt ist, eine Routungs- und/oder Weiterleitungsoperation von IPv6-Datenpaketen auf der Netzwerkschicht (Layer 3) gemäß dem OSI (Open Systems Interconnection)-Modell bereitzustellen,
wobei der Netzknoten (101) dafür ausgestaltet ist, Netzwerkschicht-Erreichbarkeitsinformationen an einen weiteren Netzknoten (102) der mehreren Netzknoten (101, 102, 103) zu senden, und/oder dafür ausgestaltet ist, Netzwerkschicht-Erreichbarkeitsinformationen von einem dritten Netzknoten (103) der mehreren Netzknoten (101, 102, 103) zu empfangen,
wobei das Telekommunikationsnetz (100) dafür ausgestaltet ist, Netzwerkschicht-Erreichbarkeitsinformationen (200) an den weiteren Netzknoten (102) zu senden und/oder Netzwerkschicht-Erreichbarkeitsinformationen (200) von dem dritten Netzknoten (103) zu empfangen, **dadurch gekennzeichnet, dass**
die Netzwerkschicht-Erreichbarkeitsinformationen (200) mindestens teilweise auf der Grundlage einer Adressinformation (210) und einer Bit-Maske (310) definiert werden, wobei die Bit-Maske (310) mindestens eine erste relevante binäre Ziffer (311) der Netzwerkschicht-Erreichbarkeitsinformationen (200) und/oder der Adressinformation (210) und eine zweite relevante binäre Ziffer (312) der Netzwerkschicht-Erreichbarkeitsinformationen (200) und/oder der Adressinformation (210) definiert, dergestalt, dass die ersten und zweiten relevanten binären Ziffern (311, 312) der Bit-Maske (310) innerhalb der Bit-Maske (310) durch mindestens eine nicht-relevante binäre Ziffer der Bit-Maske (310) getrennt sind.

7. Netzknoten (101) für ein Telekommunikationsnetz (100), wobei der Netzknoten (101) dafür ausgestaltet ist, Netzwerkschicht-Erreichbarkeitsinformationen (200) durch ein Verfahren nach einem der Ansprüche 1 bis 5 zu senden und/oder zu empfangen, wobei das Telekommunikationsnetz (100) mehrere Netzknoten (101, 102, 103) umfasst, wobei das Telekommunikationsnetz (100) ein IP (Internet Protocol)-Paketdatennetz ist, wobei der Netzknoten (101) dafür ausgelegt ist, eine Routungs- und/oder Weiterleitungsoperation auf der Netzwerkschicht (Layer 3) gemäß dem OSI (Open Systems Interconnection)-Modell bereitzustellen, dergestalt, dass ein IPv6-Datenpaket, das durch den Netzknoten (101) von anderen Netzknoten der mehreren Netzknoten (101, 102, 103) empfangen wird,
- entweder zurückgewiesen wird oder
- zu anderen Netzknoten der mehreren Netzknoten (101, 102, 103) des Telekommunikationsnetzes (100) geroutet und/oder weitergeleitet wird,
wobei der Netzknoten (101) so ausgestaltet ist, dass Netzwerkschicht-Erreichbarkeitsinformationen (200) an den weiteren Netzknoten (102) gesendet und/oder von dem dritten Netzknoten (103) empfangen werden, **dadurch gekennzeichnet, dass** die Netzwerkschicht-Erreichbarkeitsinformationen (200) mindestens teilweise auf der Grundlage einer Adressinformation (210) und einer Bit-Maske (310) definiert werden, wobei die Bit-Maske (310) mindestens eine erste relevante binäre Ziffer (311) der Netzwerkschicht-Erreichbarkeitsinformationen (200) und/oder der Adressinformation (210) und eine zweite relevante binäre Ziffer (312) der Netzwerkschicht-Erreichbarkeitsinformationen (200) und/oder der Adressinformation (210) definiert, dergestalt, dass die ersten und zweiten relevanten binären Ziffern (311, 312) der Bit-Maske (310) innerhalb der Bit-Maske (310) durch mindestens eine nicht-relevante binäre Ziffer der Bit-Maske (310) getrennt sind.

8. Programm, das einen computerlesbaren Programmcode umfasst, der, wenn er auf einem Computer und/oder in einem Netzknoten (101) eines Telekommunikationsnetzes (100) ausgeführt wird, den Computer und/oder den Netzknoten (101) des Telekommunikationsnetzes (100) veranlasst, ein Verfahren nach einem der Ansprüche 1 bis 5 auszuführen.

9. Computerprogrammprodukt zum Senden und/oder Empfangen von Netzwerkschicht-Erreichbarkeitsinformationen durch einen Netzknoten (101) eines Telekommunikationsnetzes (100), wobei das Computerprogrammprodukt ein Computerprogramm umfasst, das auf einem Speichermedium gespeichert ist, wobei das Computerprogramm Programmcode umfasst, der, wenn er auf einem Computer und/oder in einem Netzknoten (101) des Telekommunikationsnetzes (100) ausgeführt wird, den Computer und/oder den Netzknoten (101) des Telekommunikationsnetzes (100) veranlasst, ein Verfahren nach einem der Ansprüche 1 bis 5 auszuführen.

## Revendications

1. Procédé pour transmettre et/ou recevoir des informations d'accessibilité de couche réseau (200) par un noeud de réseau (101) d'un réseau de télécommunications (100), dans lequel le réseau de télécommunications (100) comprend une pluralité de noeuds de réseau (101, 102, 103), dans lequel le réseau de télécommunications (100) est un réseau de données par paquets de protocole Internet, IP, dans lequel le noeud de réseau (101) fournit une opération de routage et/ou de réacheminement de paquets de données IPv6 sur la couche réseau, couche 3, selon le modèle d'interconnexion de systèmes ouverts, modèle OSI
dans lequel le noeud de réseau (101) transmet des informations d'accessibilité de couche réseau (200) à un autre noeud de réseau (102) de la pluralité de noeuds de réseau (101, 102, 103) et/ou reçoit des informations d'accessibilité de couche réseau (200) à partir d'un troisième noeud de réseau (103) de la pluralité de noeuds de réseau (101, 102, 103),
dans lequel le procédé comprend au moins l'étape consistant à :
transmettre des informations d'accessibilité de couche réseau (200) à l'autre noeud réseau (102) et/ou recevoir des informations d'accessibilité de couche réseau (200) à partir du troisième noeud de réseau (103), **caractérisé en ce que** les informations d'accessibilité de couche réseau (200) sont définies, au moins en partie, sur la base d'informations d'adresse (210) et d'un masque de bits (310), le masque de bits (310) définissant au moins un premier chiffre binaire pertinent (311) des informations d'accessibilité de couche réseau (200) et/ou des informations d'adresse (210), et un second chiffre binaire pertinent (312) des informations d'accessibilité de couche réseau (200) et/ou des informations d'adresse (210), de sorte que les premier et second chiffres binaires pertinents (311, 312) du masque de bits (310) sont séparés - au sein du masque de bits (310) - par au moins un chiffre binaire non pertinent du masque de bits (310).

2. Procédé selon la revendication 1, dans lequel l'opération de routage et/ou de réacheminement du noeud de réseau (101) résulte en ce que des paquets de données IPv6 reçus par le noeud de réseau (101) à partir d'autres noeuds de réseau de la pluralité de noeuds de réseau (101, 102, 103) sont
- soit rejetés,
- soit routés et/ou réacheminés vers d'autres noeuds de réseau de la pluralité de noeuds de réseau (101, 102, 103) du réseau de télécommunications (100).

3. Procédé selon l'une des revendications précédentes, dans lequel lesdits au moins premier et second chiffres binaires pertinents (311, 312) du masque de bits (310) se rapportent aux 64 chiffres binaires les plus à gauche des informations d'accessibilité de couche réseau (200) et/ou des informations d'adresse (210), spécifiant au moins l'un des éléments suivants : une indication sémantique, une indication de type de trafic, une indication de localisation, une indication de topologie, et une indication d'abonné.

4. Procédé selon l'une des revendications précédentes, dans lequel les informations d'accessibilité de couche réseau (200) et/ou les informations d'adresse (210) comprennent
- un premier nombre de chiffres binaires liés à une indication de type de trafic et/ou
- un deuxième nombre de chiffres binaires liés à une zone de routeur et/ou
- un troisième nombre de chiffres binaires liés à un utilisateur ou liés à un port et/ou
- un quatrième nombre de chiffres binaires liés à un sous-réseau d'utilisateurs,
dans lequel les premier et second chiffres binaires (311, 312) font partie du premier nombre de chiffres binaires et/ou du deuxième nombre de chiffres binaires et/ou du troisième nombre de chiffres binaires et/ou du quatrième nombre de chiffres binaires.

5. Procédé selon l'une des revendications précédentes, dans lequel les premier et second chiffres binaires (311, 312) des informations d'accessibilité de couche réseau (200) et/ou des informations d'adresse (210) font partie des 64 bits les plus à gauche des informations d'accessibilité de couche réseau (200) et/ou des informations d'adresse (210) .

6. Réseau de télécommunications (100) pour transmettre et/ou recevoir des informations d'accessibilité de couche réseau (200) par un noeud de réseau (101) du réseau de télécommunications (100), dans lequel le réseau de télécommunications (100) comprend une pluralité de noeuds de réseau (101, 102, 103), dans lequel le réseau de télécommunications (100) est un réseau de données par paquets de protocole Internet, IP, dans lequel le noeud de réseau (101) est conçu pour fournir une opération de routage et/ou de réacheminement de paquets de données IPv6 sur la couche réseau, couche 3, selon le modèle d'interconnexion de systèmes ouverts, modèle OSI,
dans lequel le noeud de réseau (101) est configuré pour transmettre des informations d'accessibilité de couche réseau à un autre noeud de réseau (102) de la pluralité de noeuds de réseau (101, 102, 103) et/ou est configuré pour recevoir des informations d'accessibilité de couche réseau à partir d'un troisième noeud de réseau (103) de la pluralité de noeuds de réseau (101, 102, 103),
dans lequel le réseau de télécommunications (100) est configuré pour transmettre des informations d'accessibilité de couche réseau (200) à l'autre noeud réseau (102) et/ou recevoir des informations d'accessibilité de couche réseau (200) à partir du troisième noeud de réseau (103), **caractérisé en ce que** les informations d'accessibilité de couche réseau (200) sont définies, au moins en partie, sur la base d'informations d'adresse (210) et d'un masque de bits (310), le masque de bits (310) définissant au moins un premier chiffre binaire pertinent (311) des informations d'accessibilité de couche réseau (200) et/ou des informations d'adresse (210), et un second chiffre binaire pertinent (312) des informations d'accessibilité de couche réseau (200) et/ou des informations d'adresse (210), de sorte que les premier et second chiffres binaires pertinents (311, 312) du masque de bits (310) sont séparés - au sein du masque de bits (310) - par au moins un chiffre binaire non pertinent du masque de bits (310).

7. Noeud de réseau (101) pour un réseau de télécommunications (100), dans lequel le noeud de réseau (101) est configuré pour transmettre et/ou recevoir des informations d'accessibilité de couche réseau (200) par un procédé selon l'une des revendications 1 à 5, dans lequel le réseau de télécommunications (100) comprend une pluralité de noeuds de réseau (101, 102, 103), dans lequel le réseau de télécommunications (100) est un réseau de données par paquets de protocole Internet, IP, dans lequel le noeud de réseau (101) est conçu pour fournir une opération de routage et/ou de réacheminement sur la couche réseau, couche 3, selon le modèle d'interconnexion de systèmes ouverts, modèle OSI, de sorte qu'un paquet de données IPv6 reçu par le noeud de réseau (101) à partir d'autres noeuds de réseau de la pluralité de noeuds de réseau (101, 102, 103) est
- soit rejeté,
- soit routé et/ou réacheminé vers d'autres noeuds de réseau de la pluralité de noeuds de réseau (101, 102, 103) du réseau de télécommunications (100),
dans lequel le noeud de réseau (101) est fourni de sorte que des informations d'accessibilité de couche réseau (200) soient transmises à l'autre noeud réseau (102) et/ou reçues à partir du troisième noeud de réseau (103), **caractérisé en ce que** les informations d'accessibilité de couche réseau (200) sont définies, au moins en partie, sur la base d'informations d'adresse (210) et d'un masque de bits (310), le masque de bits (310) définissant au moins un premier chiffre binaire pertinent (311) des informations d'accessibilité de couche réseau (200) et/ou des informations d'adresse (210), et un second chiffre binaire pertinent (312) des informations d'accessibilité de couche réseau (200) et/ou des informations d'adresse (210), de sorte que les premier et second chiffres binaires pertinents (311, 312) du masque de bits (310) sont séparés - au sein du masque de bits (310) - par au moins un chiffre binaire non pertinent du masque de bits (310) .

8. Programme comprenant un code de programme lisible par ordinateur qui, lorsqu'il est exécuté sur un ordinateur et/ou sur un noeud de réseau (101) d'un réseau de télécommunications (100), amène l'ordinateur et/ou le noeud de réseau (101) du réseau de télécommunications (100) à effectuer un procédé selon l'une des revendications 1 à 5.

9. Produit-programme informatique pour transmettre et/ou recevoir des informations d'accessibilité de couche réseau par un noeud de réseau (101) d'un réseau de télécommunications (100), le produit-programme informatique comprenant un programme informatique stocké sur un support de stockage, le programme informatique comprenant un code de programme qui, lorsqu'il est exécuté sur un ordinateur et/ou sur un noeud de réseau (101) du réseau de télécommunications (100), amène l'ordinateur et/ou le noeud de réseau (101) du réseau de télécommunications (100) à exécuter un procédé selon revendications 1 à 5.
